# EUROPÄISCHE PATENTSCHRIFT

(11) **EP 1 437 816 B1**
(45) Veröffentlichungstag und Bekanntmachung des Hinweises auf die Patenterteilung: **27.09.2006**
(21) Anmeldenummer: 04000203.2
(22) Anmeldetag: 08.01.2004
(51) Int. Cl.: H02J 17/00, G06K 7/00, G06K 19/07, G01S 13/02

(54) **Schaltungsanordnung zur Bereitstellung elektrischer Leistung aus einem elektromagnetischen Feld**
Circuit arrangement for providing electric power from an eletromagnetic field
Circuit pour fournir de la puissance électrique à partir d'un champ électromagnétique

(30) Priorität: 10.01.2003 DE 10301452; 04.12.2003 DE 10357665
(43) Veröffentlichungstag der Anmeldung: 14.07.2004
(73) Patentinhaber: ATMEL Germany GmbH, 74072 Heilbronn (DE)
(72) Erfinder: Fischer, Martin, Dipl.-Ing., 74629 Gleichen (DE); Friedrich, Ulrich, Dipl.-Ing. (FH), 74258 Ellhofen (DE); Karthaus, Udo, Dipl.-Ing., 89079 Ulm (DE)

(56) Entgegenhaltungen:
- EP-A- 0 829 940
- EP-A- 1 018 692
- EP-A- 1 045 336
- EP-A- 1 083 519
- EP-A- 1 211 635
- EP-A- 1 326 202
- DE-A- 19 629 291
- FR-A- 2 782 209
- GB-A- 2 321 726

## Beschreibung

Die Erfindung bezieht sich auf eine Schaltungsanordnung nach dem Oberbegriff des Anspruchs 1.

Schaltungsanordnungen dieser Art werden z.B. für Transponder bei kontaktlosen Identifikationssystemen (RFID-Systemen) und für Remote-Sensoren verwendet, um Identifikations- oder Sensorinformation kontaktlos vom Transponder oder Sensor zu einer Basis- bzw. Auslesestation zu übertragen. Wenn nachfolgend von Transpondern die Rede ist, sollen Remote-Sensoren mit umfasst sein.

Die Transponder bzw. deren Sende- und Empfangseinrichtungen verfügen üblicherweise nicht über einen aktiven Sender für die Datenübertragung zur Basisstation. Bei derartigen nicht aktiven Systemen, die als passive Systeme bezeichnet werden, wenn sie keine eigene Energieversorgung aufweisen, und als semipassive Systeme bezeichnet werden, wenn sie eine eigene Energieversorgung aufweisen, wird zur Datenübertragung im Fernfeld der Basisstation in Verbindung mit UHF oder Mikrowellen in der Regel die sogenannte Backscatter- oder Rückstreukopplung eingesetzt. Hierzu werden von der Basisstation elektromagnetische Wellen emittiert, die durch die Sende- und Empfangseinrichtung des Transponders entsprechend den an die Basisstation zu übertragenden Daten mit einem Modulationsverfahren moduliert und reflektiert werden. Dies geschieht im allgemeinen durch eine Eingangsimpedanzänderung der Sende- und Empfangseinrichtung, die eine Veränderung der Reflexionseigenschaften einer daran angeschlossenen Antenne bewirkt.

Die Anforderungen an die Übertragungsreichweite, insbesondere passiver Transponder, nehmen ständig zu. Um bei passiven Transpondern hohe Übertragungsreichweiten zu realisieren, muss die Antenne bzw. die an die Antenne angeschlossene Schaltung angepasst dimensioniert werden, und ein Gleichrichter, der das von der Antenne empfangene Wechselsignal empfängt, muss selbst kleinste Spannungen in eine ausreichende Betriebsspannung umsetzen können. Eine derart hohe Empfindlichkeit kann jedoch im Nahfeld der Basisstation, bedingt durch die dort vorherrschenden hohen Feldstärken, zu einer Zerstörung des Gleichrichters oder anderer Schaltungsteile führen. Wenn beispielsweise der Gleichrichter im Nahfeld eine zu hohe Spannung generiert, die an seinem Ausgang durch einen Spannungsregler begrenzt wird, kann es je nach Ausführung des Spannungsreglers sein, dass dieser einen erhöhten Stromfluss im Gleichrichter verursacht, der zu einer Überschreitung von dessen Maximalleistung und dadurch zu seiner Zerstörung führen kann.

Zur Begrenzung der von der Antenne im Nahfeld entnommenen Leistung wird ein sogenanntes Detuning, d.h. Verstimmen, des an die Antenne angeschlossenen Eingangskreises vorgenommen. Diese Fehlanpassung führt zu einer Zunahme des reflektierten Leistungsanteils und folglich zu einer Abnahme des absorbierten Leistungsanteils.

Bei herkömmlichen Systemen wird dies mit Hilfe einer Detuning-Einheit bewerkstelligt, die einen Modulator mit Amplitudentastung (ASK) verwendet, der zur Fehlanpassung den Realteil der Eingangsimpedanz des an die Antenne angeschlossenen Schaltungsteils bzw. Eingangsteils verändert. Dazu wird der ASK-Modulator im Eingangsteil oder als zusätzlicher Lastwiderstand am Gleichrichterausgang platziert. Eine derartige Schaltungsanordnung ist beispielsweise aus der EP 1 211 635 A2 bekannt. Dies setzt jedoch einen im Vergleich zum Imaginärteil hohen Realteil der Eingangsimpedanz voraus. Der ASK-Modulator wird hierbei zusätzlich zum ASK-Modulationssteuersignal von einem in der Detuning-Einheit angeordneten Regler angesteuert, der in Abhängigkeit von der durch die Antenne eingespeisten Leistung eine geeignete Fehlanpassung durch Arbeitspunktjustage des ASK-Modulators bewirkt. Wenn zur Datenübertragung zwischen Transponder und Basisstation eine Phasenumtastungs(PSK)-Modulation verwendet wird, setzt dies einen geringen Realteil im Vergleich zum Imaginärteil der Eingangsimpedanz voraus. Zur Einstellung der Fehlanpassung über die Veränderung des Realteils muss daher mit Hilfe eines Schaltmittels, beispielsweise eines Transistors, ein niederohmiger Pfad im Eingangsteil oder am Ausgang des Gleichrichters geschaffen werden. Derartig niederohmige Schaltmittel weisen in der Regel größere Parasitäten auf, die im Normalbetrieb zu entsprechenden Verlusten führen, wodurch sich die Übertragungsreichweite verringert. Daher ist die PSK-Modulation zur Datenübertragung in der Regel nicht mit einer Detuning-Einheit kombinierbar, die auf der Veränderung des Realteils der Eingangsimpedanz, d.h. auf einer ASK-Modulation, basiert.

Aus der DE 196 29 291 A1 ist es bekannt, in einem Eingangskreis eines Transponders zwei antiparallele Dioden zum Electrostatic-Discharge(ESD)-Schutz anzuordnen. Die Dioden werden hierbei leitend, wenn, beispielsweise aufgrund einer ESD-Störung, eine Eingangsspannung eine Dioden-Schwellspannung überschreitet. Eine feldstärkeabhängige Leistungsanpassung findet nicht statt.

Aus der EP 1 045 336 A1 ist ein System bestehend aus einer Basisstation und einem Transponder mit magnetischer Kopplung im Nahfeld bekannt, wobei im Transponder eine Verstimmung zur Leistungsanpassung mit Hilfe von zwei schaltbaren Kondensatoren durchgeführt wird.

Der Erfindung liegt als technisches Problem die Bereitstellung einer Schaltungsanordnung der eingangs genannten Art zugrunde, die auch im Fernfeld eines elektromagnetischen Feldes eine ausreichende Spannungsversorgung sicherstellt und im Nahfeld die Leistungsaufnahme derart begrenzt, dass eine Schädigung oder ein Ausfall von Komponenten verhindert wird.

Die Erfindung löst dieses Problem durch die Bereitstellung einer Schaltungsanordnung mit den Merkmalen des Anspruchs 1.

Bei der erfindungsgemäßen Schaltungsanordnung beinhaltet die Detuning-Einheit ein zwischen die Anschlusspole eingeschleiftes Bauelement, dessen Impedanz sich in Abhängigkeit von der an der Antenne herrschenden Feldstärke des elektromagnetischen Feldes kontinuierlich ändert. Hierdurch wird z.B. ermöglicht, die Impedanz des Bauelements bei mittleren und geringen Feldstärken derart zu wählen, dass sich eine resultierende Eingangsimpedanz des Transponders an seinen Antennenanschlüssen einstellt, die einen leistungsangepassten Betrieb ermöglicht. Die Feldstärkeänderungen und folglich auch die Impedanzänderungen im Fernfeld der Basisstation sind vergleichsweise gering, wodurch dort im gesamten Bereich in etwa Leistungsanpassung herrscht. Wenn die an der Antenne herrschende Feldstärke im Nahfeld der Basisstation stark zunimmt, verändert sich die Impedanz des Bauelements stark, wodurch sich die resultierende Eingangsimpedanz des an die Antenne angeschlossenen Schaltungsteils ebenfalls stark verändert. Dies ermöglicht eine starke Fehlanpassung der Antenne und daher eine starke Reduzierung der aus dem Feld entnommenen Leistung. Eine zu große Leistungszufuhr in angeschlossene Schaltungsteile, wie einen Gleichrichter, wird verhindert. Im Fernfeld wird die Antenne angepasst betrieben und den angeschlossenen Schaltungsteilen steht die maximal aus dem Feld entnehmbare Leistung zur Verfügung.

Eine derartige Realisierung der Verstimmung weist aufgrund der mit ihr erzielbaren starken Veränderung des Real- und Imaginärteils der Eingangsimpedanz in Abhängigkeit von der Eingangsleistung eine im Vergleich zu einer ASK-basierten Detuning-Einheit wesentlich effektivere Leistungsreduktion bei steigender Eingangsleistung auf, da sich hierbei im Gegensatz zur ASK-basierten Detuning-Einheit sowohl der Real- als auch der Imaginärteil der Eingangsimpedanz verändert. Der bei der ASK verwendete Modulator bzw. Lastwiderstand, der bei einer Platzierung im Eingangsteil durch seine parasitären Eigenschaften einen negativen Einfluss auf die Effektivität des Eingangsteils hat und bei einer Platzierung am Ausgang eines Gleichrichters eine Verschlechterung der Fernfeldeigenschaften bewirkt, kann entfallen. Ein Regler zur Ansteuerung des ASK-Modulators, der in Abhängigkeit von der eingespeisten Leistung eine geeignete Fehlanpassung einstellt, ist ebenfalls nicht notwendig. Insgesamt führt dies zu einem einfacheren Design, einer Einsparung von Chipfläche, reduzierten Kosten und deutlich erhöhter Betriebssicherheit.

Die Frequenz des elektromagnetischen Feldes liegt hierbei in einem Bereich von 300 MHz bis 3000 MHz, insbesondere in einem Bereich von 400 MHz bis 2450 MHz. In diesem Frequenzbereich gibt es herkömmliche Bauteile, die eine ausreichende Impedanzänderung in Abhängigkeit von der Feldstärke aufweisen.

In einer Weiterbildung der Schaltungsanordnung nach Anspruch 2 wird die Änderung der Impedanz des Bauelements im wesentlichen durch Änderung des Imaginärteils der Impedanz hervorgerufen.

In einer Weiterbildung der Schaltungsanordnung nach Anspruch 3 ist das Bauelement ein Varaktor, insbesondere ein Varaktor mit hoher Güte. Varaktoren sind einfach zu realisierende bzw. zu integrierende Bauelemente, deren Kapazität spannungsabhängig ist. Durch die hohe Güte, d.h. geringe ohmsche Anteile, wird die durch das Bauelement hervorgerufene Verlustleistung minimiert.

In einer Weiterbildung der Schaltungsanordnung nach Anspruch 4 beinhaltet die Detuning-Einheit zwei Varaktor-Dioden, insbesondere mit hoher Güte, die antiparallel zueinander beschaltet sind. Mit Hilfe einer derartigen Beschaltung wird zusätzlich ein Electrostatic-Discharge(ESD)-Schutz realisiert.

In einer Weiterbildung der Schaltungsanordnung nach Anspruch 5 ist am Ausgang eines an die Anschlusspole der Antenne angeschlossenen Gleichrichters eine Spannungsbegrenzungsschaltung angekoppelt. Die Spannungsbegrenzungsschaltung, beispielsweise in Form von in Reihe geschalteten Dioden, stellt einen zusätzlichen Schutz vor Überspannungen dar, führt zu erhöhter Betriebssicherheit und Schutz vor Zerstörung.

In einer Weiterbildung der Erfindung nach Anspruch 6 ist die Schaltungsanordnung in einen Transponder integriert. Vorteilhafterweise ist der Transponder passiv, d.h. ohne eigene Energieversorgung.

In einer Weiterbildung der Schaltungsanordnung nach Anspruch 7 weist der Transponder eine Modulationseinrichtung zur Datenübertragung auf, die von der Antenne empfangene elektromagnetische Wellen in Abhängigkeit von zu übertragenden Daten moduliert. Vorteilhaft ist die Modulationseinrichtung gemäß Anspruch 8 zur Phasenumtastung ausgebildet. Der Realteil der Eingangsimpedanz ist bei der Phasenumtastung wesentlich niedriger als bei der Amplitudentastung, d.h. ein herkömmliches Detuning durch Regelung des Arbeitspunkts eines ASK-Modulators wie bei einer ASK-Modulation ist hier nicht ohne weiteres möglich. Selbstverständlich ist die erfindungsgemäße Schaltungsanordnung auch mit herkömmlichen ASK-Modulatoren kombinierbar.

Eine vorteilhafte Ausführungsform der Erfindung ist in den Zeichnungen dargestellt und wird nachfolgend beschrieben. Hierbei zeigen:
- Fig. 1: ein schematisches Blockschaltbild einer Schaltungsanordnung zur Bereitstellung elektrischer Leistung aus einem elektromagnetischen Feld, die in einen passiven Transponder TR integriert ist,
- Fig. 2: ein Diagramm des Realteils und des Imaginärteils der Eingangsimpedanz der Schaltungsanordnung von Fig. 1 in Abhängigkeit von der Eingangsleistung und
- Fig. 3: ein schematisches Blockschaltbild einer Schaltungsanordnung zur Bereitstellung elektrischer Leistung aus einem elektromagnetischen Feld, die in einen passiven Transponder TR integriert ist, mit Varaktorsteuerungsmitteln, die zur feldstärkeabhängigen Ansteuerung eines Varaktors dienen.

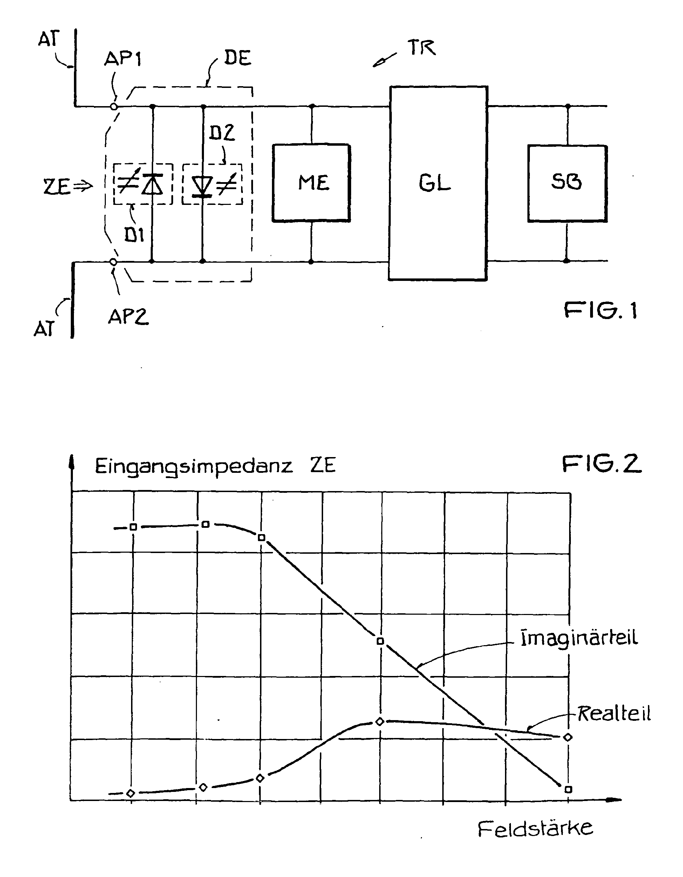

Fig 1 zeigt ein schematisches Blockschaltbild einer Schaltungsanordnung zur Bereitstellung elektrischer Leistung aus einem elektromagnetischen Feld, die in einen passiven Transponder TR integriert ist.

Die gezeigte Schaltungsanordnung umfasst eine Antenne AT, die zwei Anschlusspole AP1 und AP2 aufweist, eine zwischen die Anschlusspole AP1 und AP2 eingeschleifte Detuning-Einheit DE in Form von zwei anti-parallel beschalteten Varaktor-Dioden D1 und D2 hoher Güte mit identischen Kenngrößen, eine Modulationseinrichtung ME, einen Gleichrichter GL und einen Spannungsbegrenzer SB.

Die Antenne AT entnimmt zur Versorgung des passiven Transponders TR Leistung aus einem elektromagnetischen Feld, das von einer nicht gezeigten Basisstation abgestrahlt wird. Um Fernfeld ausreichend Leistung aus dem Feld zur Verfügung zu stellen, ist eine Eingangsimpedanz ZE des Transponders zwischen den beiden Anschlusspolen AP1 und AP2 so gewählt, dass eine Leistungsanpassung stattfindet. Die Bedingungen hierfür sind, dass der Imaginärteil der Antennenimpedanz betraglich gleich dem Imaginärteil der Eingangsimpedanz ZE des Transponders und der Realteil der Antennenimpedanz gleich dem Realteil der Eingangsimpedanz ZE des Transponders ist. Die Varaktor-Dioden D1 und D2 sind hierbei derart dimensioniert, dass sich im Fernfeld eine entsprechende Eingangsimpedanz ZE ergibt.

Die beden antiparallel beschalteten Varaktor-Dioden D1 und D2 sind direkt zwischen die Anschlusspole AP1 und AP2 der Antenne AT eingeschleift, können jedoch auch an einer enderen Stelle eines Antenneneingangskreises eingeschleift sein.

Wenn die an der Antenne herrschende Feldstärke im Nahfeld der Basisstation stark zunimmt, verändert sich die Kapazität und damit der Imaginärteil der Impedanz der Varaktor-Dioden D1 und D2 stark, wodurch sich insbesondere der Imaginärteil der Eingangsimpedanz ZE des Transponders stark ändert. Dies führt zu einer Fehlanpassung der Antenne, wodurch die dem Feld entnommene Leistung abnimmt. Die genannten Effekte basieren auf den Hochfrequenzeigenschaften der Varaktor-Dioden D1 und D2, die im verwendeten Frequenzbereich nicht mehr als herkömmliche Dioden wirken, die einer gewissen Schwellspannung Leitend werden.

Die Varktor-Dioden D1 und D2 dienen gleichzeitig auch als ESD-Schutz zur Ableitung von durch ESD hervorgerufenen Störspannungen, da die Varaktor-Dioden D1 und D2 bei den im Eingangskreis im störungsfreien Betrieb auftreden Spaanung nicht leitend werden. Zur Optimierung der ESD-Störfestigkeit sollte bezüglich der Varakto-Dioden D1 und D2 ein symmetrisches Layout gewählt werden.

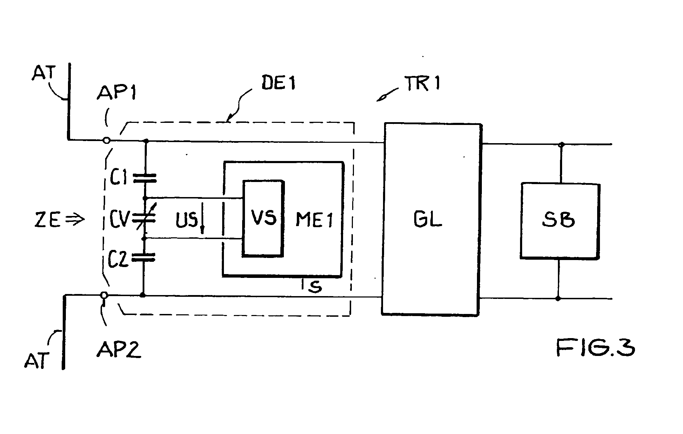

Fig. 2 zeigt ein Diagramm des Realteils und des Imaginärtells des Eingangsimpedanz ZE der Schaltungsanordnung von Fig. 1 in Abhängigkeit von der Feldstärke. Wie aus dem Diagramm ersichtlich ist, nimmt der Imaginärteil der Eingangsimpedanz bei Überschreiten einer bestimmten Feldstärke stark ab, wohingegen der Realteil zunimmt und dann in etwa konstant bleibt. Eine derartige Veränderung des Real- und Imaginärteils der Eingangsimpedanz ZE bewirkt eine im Vergleich zu einer ASK-basierten Detuning-Einheit wesentlich effektivere Leistungsreduktion bei steigender Feldstärke, da sich hierbi im gegensatz zu herk¨mmlichen Detuning-Einheiten sowohl der Real- als auch der Imaginärteil der Eingangsimpedanz ZE verändem. Die Änderung des Imaginärteils ist für die Fehlanpassung jedoch maßgeblich, da sich der Imaginärteil im Vergleich zum Realteil wesentlich stärker verändert.

Die Modulationseinrichtung ME ist an der Ausgangsseite der Detuning-Einheit DE zwischen die Anschlusspole AP1 und AP2 eingeschleift und erzeugt zur Datenübertragung an die Basisstation aus dem Eingangssignal ein phasenmoduliertes Ausgangssignal, das von der Antenne AT als Rückstreu- bzw. Backscattersignal abgestrahlt und von der Bassisstation empfangen wird.

Der Gleichrichter GL ist am Ausgang der Modulationseinrichtung ME zwischen die Anschlusspole AP1 und AP2 eingeschleift und dient der Spannungsversorgung des Transponders. Die Ausgangsspannung des Gleichrichters GL wird durch den Spannungsbegrenzer SB begrenzt, der durch eine Reihenschaltung von Dioden realisiert sein kann.

Fig. 3 zeigt ein schematisches Blockschaltbild einer alternativen Schaltungsanordnung zur Bereitstallung elektrischer Leistung aus einem elektromagnetischen Feld, die in einen passiven Transponder TR1 integriert ist.

Die gezeigte Schaltungsanordnung umfasst neben den bereits in Fig. 1 beschriebenen Elementen mit gleichlautenden Bezugszeichen eine alternativ ausgeführte Detuning-Einheit DE1. Diese umfasst einen ersten Kondensator C1, einen Varaktor CV und einen zweiten Kondensator C2, die in Serie zwischen die Anschlusspole AP1 und AP2 eingeschleift sind.

Die Detuning-Einheit DE1 umfasst weiterhin eine PSK-Modulations-einrichtung ME1, die zur Datenübertragung an die Basisstation aus dem Eingangssignal ein phasenmoduliertes Ausgangssignal erzeugt, das von der Antenne AT als Rückstreu- bzw. Backscattersignal abgestrahlt und von der Basisstation empfangen wird. Zur Erzeugung unterschiedlicher Phasenlagen durch Änderung der Eingangsimpedanz ZE umfasst die Modulationseinrichtung ME1 Varaktorsteuerungsmittel VS in Form einer steuerbaren Spannungsquelle, die den Varaktor mit einer Steuerspannung US in Abhängigkeit von den zu übertragenden Daten zur Veränderung seiner Kapazität beaufschlagt.

Eine zur Durchführung eines derartiges Modulationsverfahrens geeignete Vorrichtung ist beispielsweise in der älteren deutschen Patentanmeldung 10158442.3 der Anmelderin dargestellt.

Zusätzlich zur Datenübertragung dienen die Varaktorsteuerungsmittel zur feldstärkeabhängigen Ansteuerung des Varaktors CV. Eine Feldstärkeinformation S über die Feldstärke an der Antenne AT wird von einer nicht gezeigten Detektions- und Steuereinheit, die hierzu die Feldstärke geeignet detektiert, in die Modulationseinrichtung ME1 eingespeist, die in Abhängigkeit davon eine geeignete Fehlanpassung durch Arbeitspunktjustage des PSK-Modulators bewirkt. Im Unterschied zu der in Fig. 1 gezeigten Schaltungsanordnung stellt sich hierbei die Varaktorkapazität nicht selbstständig in Abhängigkeit von der Feldstärke ein, sondern wird in Abhängigkeit von der detektierten Feldstärke durch die Varaktorsteuerungsmittel VS eingestellt.

Im gezeigten Ausführungsbeispiel ist die Modulationseinrichtung ME1 in die Detuning-Einheit DE1 integriert, sie kann jedoch auch getrennt von dieser realisiert sein.

Die gezeigten Schaltungsanordnungen ermöglichen den sicheren und zerstörungsfreien Betrieb eines Transponders im Nah- und im Fernfeld der von der Basisstation emittierten elektromagnetischen Wellen, wobei aufgrund der im Transponder verwendeten PSK-Modulation hohe Übertragungsreichweiten und eine große Störsicherheit realisierbar sind.

Es versteht sich, dass die Erfindung auch in andere drahtlos leistungsversorgte Bauteile anstatt des geseigten Transponders integrierbar ist, wie z.B. in einen remote-Sensor.

Dabei umfasst die Erfindung auch semipassive Anwendungen, bei denen nur ein Teil der für das Bauteil benötigten Leistung drahtlos über die Antenne zugeführt wird, während der restliche Leistungsbedarf anderweitig gedeckt wird.

## Patentansprüche

1. Schaltungsanordnung zur Bereitstellung elektrischer Leistung aus einem elektromagnetischen, von einer Basisstation emittierten Feld für rückstreubasierte, insbesondere passive, Transponder, mit
- einer Antenne (AT) mit zwei Anschlusspolen (AP1, AP2),
- einer Detuning-Einheit (DE) zur Begrenzung der von der Antenne (AT) aus dem Feld entnommenen Leistung, die zwischen die Anschlusspole (AP1, AP2) eingeschleift ist,
**dadurch gekennzeichnet, dass**
- die Frequenz des elektromagnetischen Feldes in einem Bereich von 300 MHz bis 3000 MHz, insbesondere von 400 MHz bis 2450 MHz, liegt, und
- die Detuning-Einheit (DE) eine zwischen die Anschlusspole eingeschleifte Varaktor-Diode (D1, D2) umfasst, deren Impedanz sich in Abhängigkeit von der an der Antenne (AT) herrschenden Feldstärke des elektromagnetischen Feldes ändert.

2. Schaltungsanordnung nach Anspruch 1, **dadurch gekennzeichnet, dass** die Änderung der Impedanz der Varaktor-Diode (D1, D2) im wesentlichen durch Änderung des Imaginärteils der Impedanz hervorgerufen wird.

3. Schaltungsanordnung nach Anspruch 1 oder Anspruch 2, **dadurch gekennzeichnet, dass** die Detuning-Einheit zwei Varaktor-Dioden (D1, D2), insbesondere mit hoher Güte, beinhaltet, die antiparallel zueinander beschaltet sind.

4. Schaltungsanordnung nach einem der vorhergehenden Ansprüche, **dadurch gekennzeichnet, dass** am Ausgang eines an die Anschlusspole (AP1, AP2) der Antenne (AT) angeschlossenen Gleichrichters (GL) eine Spannungsbegrenzungsschaltung (SB) angekoppelt ist.

5. Schaltungsanordnung nach einem der vorhergehenden Ansprüche, **dadurch gekennzeichnet, dass** sie in einen Transponder (TR, TR1), insbesondere in einen passiven Transponder integriert ist.

6. Schaltungsanordnung nach Anspruch 5, **dadurch gekennzeichnet, dass** der Transponder (TR, TR1) eine Modulationseinrichtung (ME, ME1) zur Datenübertragung an die Basisstation aufweist, die von der Antenne empfangene elektromagnetische Wellen in Abhängigkeit von zu übertragenden Daten moduliert.

7. Schaltungsanordnung nach Anspruch 6, **dadurch gekennzeichnet, dass** die Modulationseinrichtung (ME, ME1) zur Phasenumtastung ausgebildet ist.

## Claims

1. Circuit arrangement for provision of electrical power from an electromagnetic field, which is emitted by a base station, for backscatter-based, particularly passive, transponders, comprising
- an antenna (AT) with two terminals (AP1, AP2),
- a detuning unit (DE) for limitation of the power which is removed from the field by the antenna (AT) and which is looped-in between the terminals (AP1, AP2),
**characterised in that**
- the frequency of the electromagnetic field lies in a range of 300 MHz to 3000 MHz, particularly from 400 MHz to 2450 MHz, and
- the detuning unit (DE) comprises a varactor diode (D1, D2) which is looped-in between the terminals and the impedance of which varies in dependence on the field strength, which prevails at the antenna (AT), of the electromagnetic field.

2. Circuit arrangement according to claim 1, **characterised in that** the change in the impedance of the varactor diode (D1, D2) is produced substantially by varying the imaginary part of the impedance.

3. Circuit arrangement according to claim 1 or claim 2, **characterised in that** the detuning unit comprises two varactor diodes (D1, D2), particularly of high quality, which are connected anti-parallelly relative to one another.

4. Circuit arrangement according to one of the preceding claims, **characterised in that** a voltage limiting circuit (SB) is coupled to the output of a rectifier (GL) connected with the terminals (AP1, AP2) of the antenna (AT).

5. Circuit arrangement according to one of the preceding claims, **characterised in that** it is integrated in a transponder (TR, TR1), particularly in a passive transponder.

6. Circuit arrangement according to claim 5, **characterised in that** the transponder (TR, TR1) comprises a modulation device (ME, ME1) for data transmission to the base station, which device modulates electromagnetic waves, which are received from the antenna, in dependence on the data to be transmitted.

7. Circuit arrangement according to claim 6, **characterised in that** the modulation device (ME, ME1) is constructed for phase shifting.

## Revendications

1. Circuit d'alimentation en énergie électrique à partir d'un champ électromagnétique émis par une station de base pour des transpondeurs basés sur la rétrodiffusion, plus particulièrement des transpondeurs passifs, comprenant :
. une antenne (AT) à deux pôles de raccordement (AP1, AP2),
. un ensemble désaccordeur (DE) servant à limiter la puissance fournie par le champ électromagnétique par l'intermédiaire de l'antenne (AT), qui est montée entre les pôles de raccordement (AP1, AP2),
**caractérisé en ce que**
. la fréquence du champ électromagnétique est située dans une plage allant de 300 MHz à 3000 MHz, plus particulièrement de 400 MHz à 2450 MHz, et **en ce que**
. l'ensemble désaccordeur (DE) comporte une diode varactor (D1, D2) montée entre les pôles de raccordement, dont l'impédance varie en fonction de l'intensité du champ magnétique qui s'applique à l'antenne (AT).

2. Circuit selon la revendication 1, **caractérisé en ce que** la variation de l'impédance de la diode varactor (D1, D2) est générée essentiellement par la modification de la partie imaginaire de l'impédance.

3. Circuit selon la revendication 1 ou 2, **caractérisé en ce que** l'ensemble désaccordeur comprend deux diodes varactor (D1, D2), en particulier de faibles composantes ohmiques, qui sont branchées tête bêche.

4. Circuit selon l'une quelconque des revendications précédentes, **caractérisé en ce qu'**à la sortie d'un redresseur (GL) raccordé aux pôles de raccordement (AP1, AP2) de l'antenne (AT) est accouplé un circuit limiteur de tension (SB).

5. Circuit selon l'une quelconque des revendications précédentes, **caractérisé en ce qu'**il est intégré à un transpondeur (TR, TR1), plus particulièrement à un transpondeur passif.

6. Circuit selon la revendication 5, **caractérisé en ce que** le transpondeur (TR, TR1) présente un dispositif de modulation (ME, ME1) pour la transmission de données à la station de base, qui module des ondes électromagnétiques reçues par l'antenne en fonction de données à transmettre.

7. Circuit selon la revendication 6, **caractérisé en ce que** le dispositif de modulation (ME, ME1) est conçu pour la modulation de phase.
